(19) Europäisches Patentamt
European Patent Office
Office européen des brevets

(11) EP 1 730 200 B1

# (12) EUROPEAN PATENT SPECIFICATION

(45) Date of publication and mention of the grant of the patent:
**23.04.2014 Bulletin 2014/17**

(21) Application number: **05731429.6**

(22) Date of filing: **22.03.2005**

(51) Int Cl.:
***C08B 37/00*** *(2006.01)*

(86) International application number:
**PCT/EP2005/003720**

(87) International publication number:
**WO 2005/090409 (29.09.2005 Gazette 2005/39)**

## (54) Method for quantitatively determining specific constituting heparins or low molecular weight heparins using HPLC

Verfahren zur quantitativen Bestimmung von spezifischen Gruppen von Heparinen oder niedermolekularen Heparinen mittels HPLC

Procédé de détermination quantitative de groupes spécifiques constituant des héparines ou d'héparines a faible poids moleculaire au moyens d'une CLHP

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **24.03.2004 EP 04290790**

(43) Date of publication of application:
**13.12.2006 Bulletin 2006/50**

(73) Proprietor: **Aventis Pharma S.A.**
**92160 Antony (FR)**

(72) Inventors:
- **MOURIER, Pierre**
  **F-94220 CHARENTON LE PONT (FR)**
- **VISKOV, Christian**
  **F-91130 RIS ORANGIS (FR)**

(74) Representative: **Blot, Philippe Robert Emile et al**
**Cabinet Lavoix**
**2, place d'Estienne d'Orves**
**75441 Paris Cedex 09 (FR)**

(56) References cited:
**WO-A-01/29055 WO-A-95/33468**

- **THANAWIROON CHARUWAN ET AL: "Liquid chromatography/mass spectrometry sequencing approach for highly sulfated heparin-derived oligosaccharides." 23 January 2004 (2004-01-23), JOURNAL OF BIOLOGICAL CHEMISTRY, VOL. 279, NR. 4, PAGE(S) 2608-2615 , XP002297923 ISSN: 0021-9258 the whole document**
- **IMANARI T ET AL: "High-performance liquid chromatographic analysis of glycosaminoglycan-derived oligosaccharides" JOURNAL OF CHROMATOGRAPHY A, ELSEVIER SCIENCE, NL, vol. 720, no. 1, 12 January 1996 (1996-01-12), pages 275-293, XP004038365 ISSN: 0021-9673**
- **VYNIOS D H ET AL: "Advances in analysis of glycosaminoglycans: its application for the assessment of physiological and pathological states of connective tissues" JOURNAL OF CHROMATOGRAPHY B: BIOMEDICAL SCIENCES & APPLICATIONS, ELSEVIER SCIENCE PUBLISHERS, NL, vol. 781, no. 1-2, 5 December 2002 (2002-12-05), pages 21-38, XP004394146 ISSN: 1570-0232**
- **THANAWIROON C ET AL: "Separation of a complex mixture of heparin-derived oligosaccharides using reversed-phase high-performance liquid chromatography" JOURNAL OF CHROMATOGRAPHY A, ELSEVIER SCIENCE, NL, vol. 1014, no. 1-2, 3 October 2003 (2003-10-03), pages 215-223, XP004456355 ISSN: 0021-9673**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 730 200 B1

## Description

An embodiment of the present invention is a method for detecting or quantifying the amount of components having a 1-6 anhydro structure or acetylated sugars in a sample of fractionated heparins or unfractionated heparins.

Heparins are biologically active agents of the glycosaminoglycan family, extracted from natural sources, and have valuable anticoagulant and antithrombotic properties. In particular, they are useful in the treatment of postoperative venous thromboses.

To create low molecular weight heparins (LMWH) from source heparin, the longer heparinic polysaccharide chains must be broken down into shorter chains of lower molecular weight This can be done by either chemical or enzymatic depolymerization. The result can be average molecular weights for LMWH polysaccharide chains of approximately 5,000 Da. LMWHs, like unfractionated heparin, inhibit coagulation by binding to ATIII at particular pentasaccharide sequences distributed along some of the polysaccharide chains.

Each LMWH manufacturer of an approved product utilizes a distinct depolymerization process. Unless two manufacturers use the same process, this process distinction results in LMWHs with distinct chemical structures and, therefore, differing pharmacological activity and different approved indications for clinical use. The resulting LMWHs are structurally differentiated by the depolymerization processes used for their manufacture (R.J. Linhardt et al., Seminars in Thombosis and Hemostatis 1999; 25(3 Supp.): 5-16). As a result, LMWHs are more heterogeneous than heparin. Each different process causes unique and highly complex structural modifications to the polysaccharide chains. These modifications include differences in chain lengths and chain sequences, as well as in structural fingerprints. Consequently, the different LMWHs may have distinctive pharmacological profiles and different approved clinical indications.

WO 95/33468 **discloses the separation of decasaccharides by Strong Anion Exchange (SAX)-HPLC eluted with a NaCl gradient, from a mixture obtained by enzymatic depolymerization of heparin.**

Enoxaparin sodium is available from Aventis and sold in the United States in the form of enoxaparin sodium injection, under the trademark Lovenox® (Clexane® in some other countries). In general, enoxaparin sodium is obtained by alkaline degradation of heparin benzyl ester derived from porcine intestinal mucosa. Its structure is characterized, for example, by a 2-0-sulfo-4-enepyranosuronic acid group at the non-reducing end and a 2-N,6-0-disulfo-D-glucosamine at the reducing end of the chain. The average molecular weight is about 4500 daltons. The molecular weight distribution is:

| | |
|---|---|
| <2000 daltons | ≤20% |
| 2000 to 8000 daltons | ≥68% |
| >8000 daltons | ≤18% |

In the manufacture of enoxaparin sodium, there is a 6-O-desulfation of the glucosamine, leading to the formation of derivatives called "1,6 anhydro" (International Patent Application WO 01/29055), as shown below :

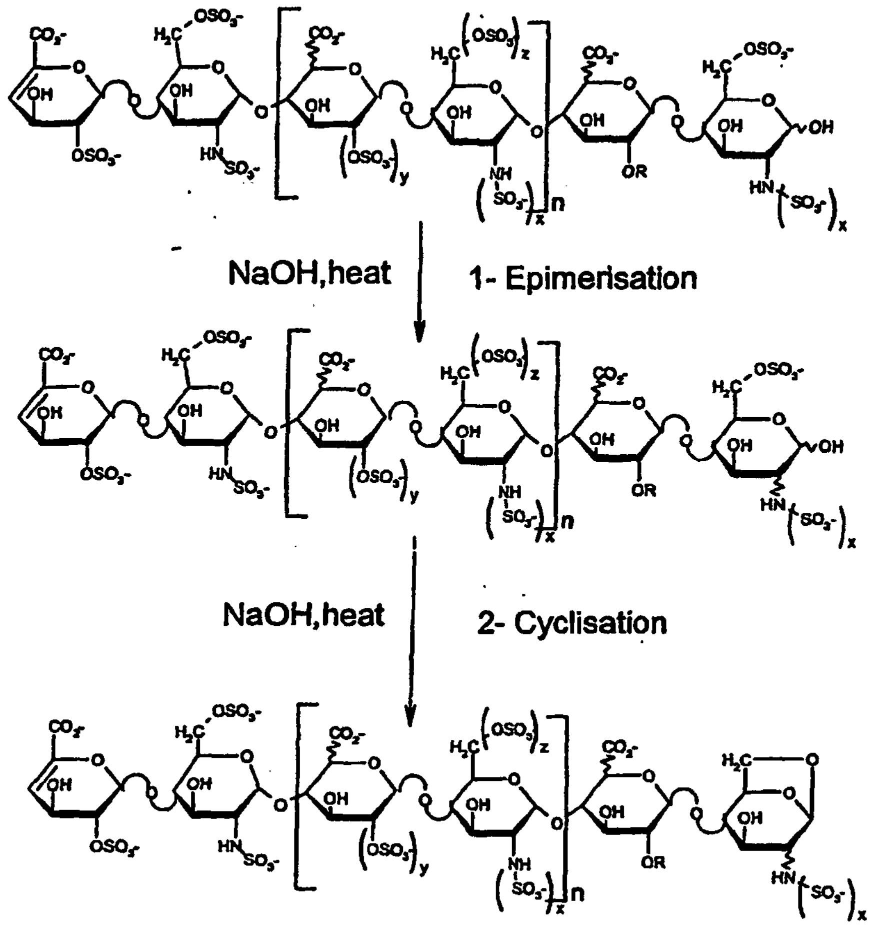


This type of derivative is only obtained for oligosaccharide chains whose terminal glucosamine is 6-O-sulfated.

The percentage of oligosaccharide chains whose end is modified with a 1,6-anhydro bond is a structural characteristic of the oligosaccharide mixture of enoxaparin sodium and it should be possible to measure it. Based on current knowledge, between 15 % and 25 % of the components of enoxaparin sodium have a 1,6-anhydro structure at the reducing end of their chain. The embodiment of the present invention therefore provides a method for analysing unfractionated heparins and fractionated heparins. "Fractionated heparins" as used herein refers to any heparin that undergoes depolymerization, for example low-molecular-weight heparins (LMWH), including enoxaparin sodium and any LMWH seeking approval by a regulatory authority pursuant to an application citing Lovenox®/ Clexane® (enoxaparin sodium injection) as the listed drug.

In one embodiment, the method of analysis according to the invention is the following:

> The sample to be assayed is depolymerized by the action of heparinases and then, where appropriate, the depolymerizate obtained is reduced and then analysis is carried out by high-performance liquid chromatography.

The method as defined above is characterized in that the depolymerizate is analysed to detect the presence of oligosaccharide chains whose end is modified with a 1,6-anhydro bond ("1,6-anhydro groups").

In a related embodiment, the sample to be assayed is first exhaustively depolymerized with a mixture of heparinases, for example, heparinase 1 (EC 4.2.2.7.), heparinase 2 (heparin lyase II) and heparinase 3 (EC 4.2.2.8.), for example with each heparinase being present as 0.5 units/ml. (These enzymes are marketed by the group Grampian Enzymes).

A subject of the invention is therefore a method as defined in claim 1.

In one embodiment, the subject of the invention is the method as defined above, wherein the heparinases are in the form of a mixture of heparinase 1 (EC 4.2.2.7.), heparinase 2 (heparin lyase II), and heparinase 3 (EC 4.2.2.8.). The depolymerizate thus prepared is then be treated to reduce the reducing ends that are not in the 1,6-anhydro form (products described in patent application WO 01/72762). In one embodiment, the depolymerizate may be treated with an $NaBH_4$ solution in sodium acetate to reduce the reducing ends that are not in the 1,6-anhydro form. Finally, in order to be able to quantify the disaccharides 1 and 2 described below, the sample of low-molecular-weight molecular-weight

heparin, depolymerized with heparinases, may be reduced by the action of a reducing agent such as $NaBH_4$.

The subject of the invention is therefore the method as defined above, wherein the depolymerized heparin is then reduced.

A subject of the invention is additionally the method as defined above, wherein the reducing agent is $NaBH_4$. Other alkali metal salts of borohydride, such as lithium or potassium, may also be used.

The methods of assay according to the invention make it possible to clearly differentiate enoxaparin sodium from other low-molecular-weight heparins which do not contain "1,6-anhydro" derivatives. Conversely, the methods of the invention make it possible to ascertain that low-molecular-weight heparins do not have the physicochemical characteristics of enoxaparin sodium and therefore are different in nature.

The methods according to the invention may, for example, be applied to the industrial process during in-process control of samples in order to provide standardization of the process for manufacturing enoxaparin sodium and to obtain uniform batches.

After enzymatic depolymerization and reduction of the reducing ends, the 1,6-anhydro derivatives of enoxaparin sodium exist in 4 essential forms, namely disaccharide 1, disaccharide 2, disaccharide 3, and tetrasaccharide 1. The subject of the invention is therefore also the method as described above, wherein the 1,6-anhydro residues obtained during the depolymerization reaction include the following:

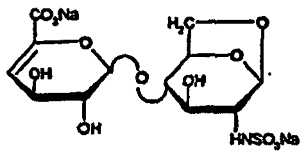

disaccharide 1

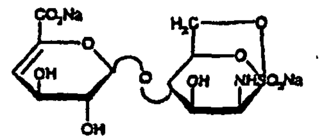

disaccharide 2

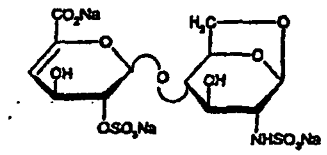

disaccharide 3

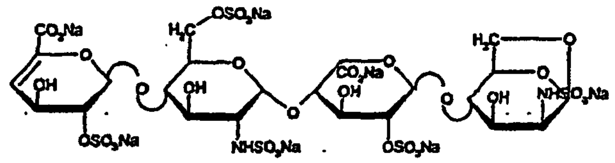

tetrasaccharide 1

All the oligosaccharides or polysaccharides that contain the 1,6-anhydro end on the terminal disaccharide unit and that do not possess a 2-O-sulfate on the uronic acid of said terminal disaccharide are completely depolymerized by the heparinases and are in the form of the disaccharides 1 and 2. On the other hand, when the terminal saccharide contains a 2-O-sulfate on the uronic acid and when it is in the mannosamine form, the 1,6-anhydro derivative is in the form of tetrasaccharide 1 (form resistant to heparinases).

Trisaccharide 1 (see below) may also be present in the mixture. It is derived from another degradation process that leads to the structure below (peeling phenomenon observed during the chemical depolymerization of enoxaparin sodium).

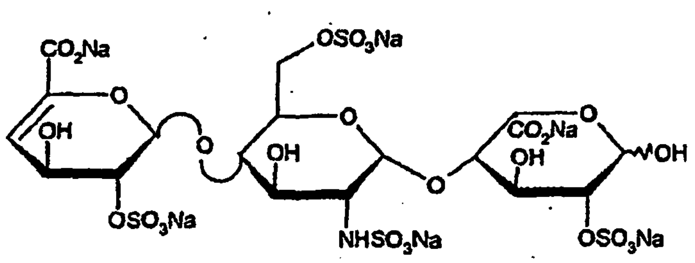

trisaccharide 1

The other constituents of the mixture are not characteristic solely of enoxaparin sodium. There are of course the 8 elementary disaccharides of the heparin chain. These 8 elementary disaccharides are marketed inter alia by the company Sigma.

Other disaccharides were identified in the mixture by the method according to the invention: the disaccharides $\Delta IIS_{gal}$ and $\Delta IVS_{gal}$, which have as their origin alkaline 2-O-desulfation of -IdoA(2S)-GlcNS(6S)- and of -IdoA(2S)-GlcNS-, leading to the formation of 2 galacturonic acids. They are not usually present in the original structure of heparin (U.M.

Desai et al., Arch. Biochem. Biophys., 306 (2) 461-468 (1993)).

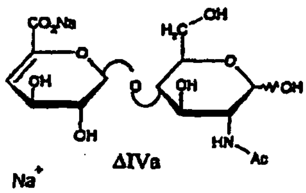
ΔIVa

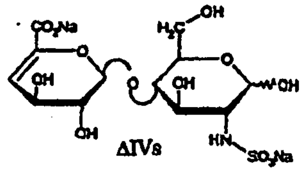
ΔIVs

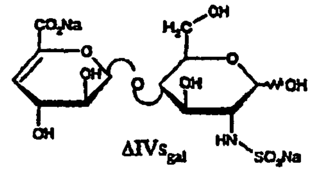
$\Delta IVs_{gal}$

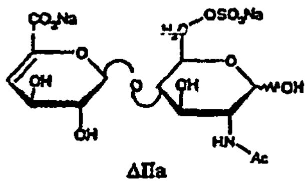
ΔIIa

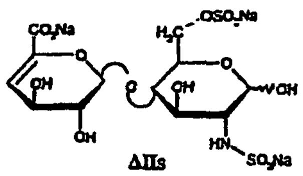
ΔIIs

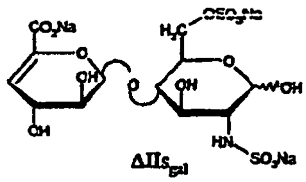
$\Delta IIs_{gal}$

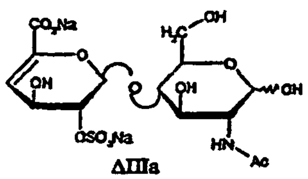
ΔIIIa

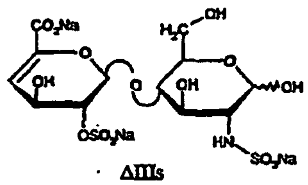
ΔIIIs

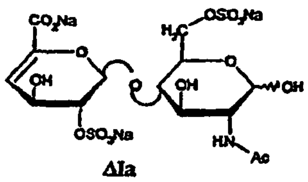
ΔIa

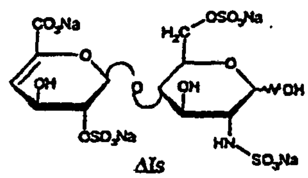
ΔIs

Oligosaccharides containing 3-O-sulfated glucosamines withstand cleavage by heparinases and remain present in the form of tetrasaccharides.

In the case of most low-molecular-weight heparins, the heparin is extracted from pig mucusa, and these principal tetrasaccharides are represented below. These tetrasaccharides are resistant to enzymatic depolymerization and reflect the sequences with affinity for antithrombin III. These tetrasaccharides are symbolized as follows: ΔIIa-$\underline{IIs}_{glu}$ and ΔIIa-$\underline{IVs}_{glu}$. (S. YAMADA, K. YOSHIDA, M. SUGIURA, K-H KHOO, H.R. MORRIS, A. DELL, J. Biol. Chem.; 270(7), 4780-4787 (1993)).

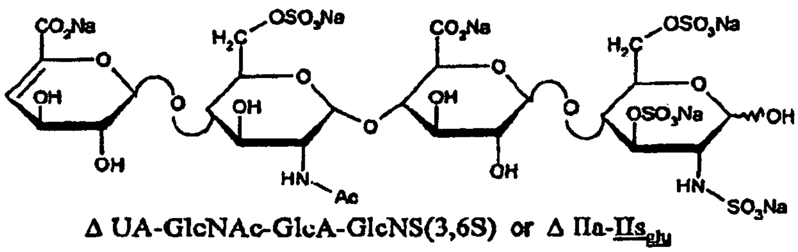

**Δ UA-GlcNAc-GlcA-GlcNS(3,6S) or Δ IIa-$\underline{IIs}_{glu}$**

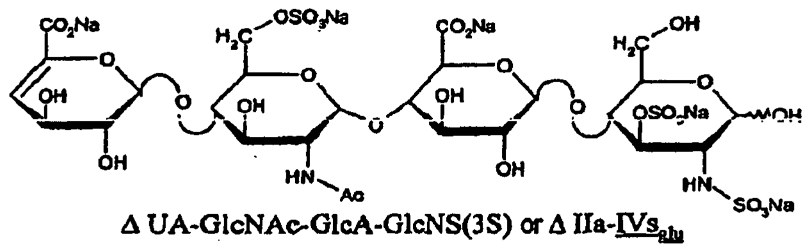

**Δ UA-GlcNAc-GlcA-GlcNS(3S) or Δ IIa-$\underline{IVs}_{glu}$**

The final constituent of the mixture cleaved with heparinases is the glycoserine end ΔGlcA-Gal-Gal-Xyl-Ser (K. Sugahara, et al., J. Biol. Chem.; 270(39), 22914-22923 (1995); K. Sugahara, et al.; J.Biol.Chem.; 267(3), 1528-1533 (1992)). The latter is generally almost absent from enoxaparin sodium (see NMR in Example 5).

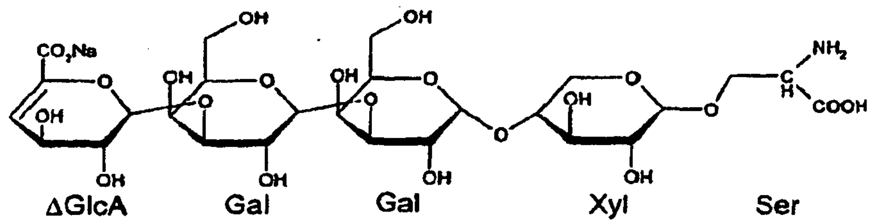

ΔGlcA Gal Gal Xyl Ser

In another aspect, the invention provides a chromatography process for detecting 1,6-anhydro groups. In one embodiment, the method involves separating the various oligosaccharides obtained after depolymerization and optionally treatment with a reducing agent such as $NaBH_4$.

The separation of the various oligosaccharides according to the present invention, **is** carried out by **SAX (Strong Anion Exchange)**-HPLC (High Performance Liquid Chromatography).

As used herein, the term "strong anion exchange chromatography" (SAX) encompasses anion exchange chromatography conducted on any resin that maintains a constant net positive charge in the range of about pH 2-12. In certain embodiments of the invention, strong anion exchange chromatography uses a solid support functionalized with quaternary ammonium exchange groups. For example, columns such as Spherisorb® SAX (Waters Corp, Milford MA) may be used having particle size of about 5 $\mu$m, a column length of about 25 cm and a column diameter of between about 1 mm and about 4.6 mm may be used.

The equipment used may be any chromatograph that allows the formation of an elution gradient and that is equipped with a suitable UV detector that is suitable for selective detection of acetylated sugars. In one embodiment of the invention, the UV detector is an array of diodes that permits the generation of UV spectra of the constituents and allows complex signals resulting from the difference between the absorbance at 2 different wavelengths to be recorded. Such a diode array detector allows the specific detection of acetylated oligosaccharides. In a related embodiment, HPLC mobile phases that are transparent in the UV region up to 200 nm are used. In this embodiment, conventional mobile phases based on NaCl, which have the additional disadvantage of requiring a passivated chromatograph in order to withstand the corrosive power of the chlorides, are excluded. Mobile phases that are used according to the invention comprise methanesulfonate.

In one embodiment, the mobile phase is an aqueous solution of ammonium methane sulfonate.

In one embodiment, the high performance liquid chromatography utilizes a mobile phase comprising a sodium perchlorate solution that is maintained at about pH 3.0.

A subject of the invention is therefore also a method of analysis as defined above by separation by anion-exchange chromatography, wherein a mobile phase that is transparent in the UV region from about 200 nM to about 400nM is used.

In certain embodiments, the strong anion chromatography separation is performed at a pH from about 2.0 to about 6.5. In a related embodiment, a pH in the region of about 3 will be used. The pH may be controlled, for example, by adding a salt to the mobile phase which possesses a buffering power at pH = 3. In certain embodiments of the invention, a salt such as a phosphate salt, which has greater buffering capacity at pH 3 than that of perchlorates, is used. Exemplary chromatographic separation conditions, not according to the invention, are given below:

<u>Mobile Phase:</u>

Solvent A: $NaH_2PO_4$, 2.5 mM, brought to pH 2.9 by adding $H_3PO_4$
Solvent B: $NaClO_4$ in 1N $NaH_2PO_4$, 2.5 mM, brought to pH 3.0 by adding $H_3PO_4$

The elution gradient may be the following:

T = 0 min: %B = 3; T = 40 min: %B = 60; T = 60 min: %B = 80

A suitable temperature, e.g. from about 40°C to about 50°C, arid pump flow rate is chosen according to the column used.

Other methods of purifying samples by SAX chromatography are known to those skilled in the art For example, SAX methods are described by K. G. Rice and R. J. Linhardt, Carbohydrate Research 190, 219-233 (1989); A. Lamkjaer, et al., Carbohydrate Research, 266, 37-52 (1995); and in patent WO 90/01501 (Example 2).

Another aspect of the invention is a method of detecting specific groups found in unfractionated heparins or

fractionated heparins.

This method increases the specificity of the UV detection of heparin or LMWH groups. As nonacetylated polysaccharides all have, at a given pH, a fairly similar UV spectrum, it is possible to selectively detect the acetylated sugars by taking as signal the difference between the absorbance at 2 wavelengths chosen such that the absorptivity of the nonacetylated saccharides is canceled out.

As illustrated below by way of example, 202 nm and 230 nm may be chosen as detection and reference wavelengths and the 202-230 nm signal may be recorded. A person skilled in the art would appreciate that the choice of wavelength that can be used according to the present invention will depend on the pH of the mobile phase (adjustments of a few nm may be necessary so as to be at the optimum of the pH).

Any UV detector that can simultaneously measure absorbance at two or more wavelengths may be used in the invention. In one embodiment of the invention, the DAD 1100 detector from the company Agilent Technologies is used. In this embodiment, a double detection will be carried out at 234 nm, on the one hand, and at 202-230 nm, on the other hand. The principle of selective detection of acetylated oligosaccharides is illustrated in Figure 1 in which the UV spectrum of a sulfated disaccharide ΔIs is compared with that of an acetylated disaccharide ΔIa.

A subject of the present invention is therefore also a method of analysis as defined above, wherein the method of detection makes it possible to selectively detect acetylated sugars.

The method of analysis uses separation by SAX chromatography, and acetylated sugars are selectively detected by measuring the difference between the absorbance at two wavelengths chosen such that the absorptivity of the nonacetylated saccharides is cancelled out.

The quantification of the four 1,6-anhydro residues described above requires a sufficient selectivity of the chromatographic system in relation to all the other constituents of the mixture. However, the two disaccharides 1 and 2, which are co-eluted in general, are poorly resolved with respect to ΔIIa, especially as the latter is present in the form of its two a and β anomers.

The identity of the two disaccharides 1 and 2 may be easily verified because they form in a few hours at room temperature in an aqueous solution of ΔIIs brought to pH 13 by adding NaOH. However, if double detection is used, the acetylated oligosaccharides ΔIVa, ΔIIa, ΔIIIa, ΔIa, ΔIIa-$IVs_{glu}$ and ΔIIa-$IIs_{glu}$ are easily identifiable. The causes of splitting of the peaks are the anomeric forms, on the one hand, and to a lesser degree the glucosamine ↔ mannosamine epimerization which is partially present for ΔIIs, ΔIIIs and ΔIs when they are in the terminal position in the oligosaccharide chain.

In certain embodiments of the invention the disaccharides 1 and 2 are quantified by reducing the sample of low-molecular-weight heparin, previously depolymerized by heparinases, via the action of $NaBH_4$.

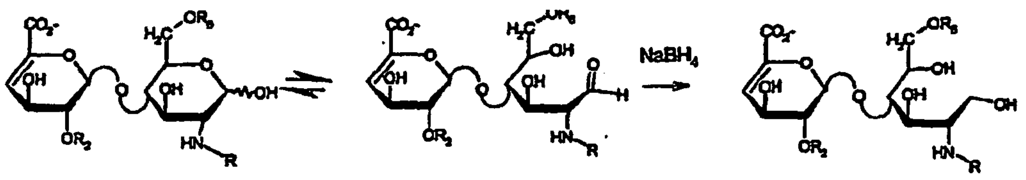


α anomer + β anomer

This reduction has the advantage of eliminating the α ↔ β anomerisms by opening the terminal oligosaccharide ring. The chromatogram obtained is simpler since the anomerisms are eliminated. Moreover, the reduction of ΔIIa reduces its retention on the column and allows easy assay of the disaccharides 1 and 2.

The examples of chromatograms described in Figures 2 and 3 clearly illustrate these phenomena and the advantages of this method.

## BRIEF DESCRIPTION OF THE DRAWINGS

Figure 1 illustrates the selective detection of acetylated oligosaccharides in which the UV spectrum of a sulfated disaccharide ΔIs is compared with that of an acetylated disaccharide ΔIa, wherein the x-axis represents wavelength (nm) and the y-axis represents absorbance (mAmps).

Figure 2 shows the chromatographic separation of enoxaparin depolymerized with heparinases before and after reduction with $NaBH_4$ (signal in fine black: UV at 234 nm; signal in thick black: UV at 202-234 nm), wherein the x-axis elution time (mins) and the y-axis represents absorbance (mAmps).

Figure 3 shows the chromatographic separation of heparin depolymerized with heparinases before and after reduc-

tion with $NaBH_4$ (signal in fine black: UV at 234 nm; signal in thick black: UV at 202-234 nm), wherein the x-axis elution time (mins) and the y-axis represents absorbance (mAmps).

EXAMPLES

The examples below are intended to illustrate various features of the invention. One skilled in the art will appreciate that the invention is not limited to the embodiments exemplified below.

**Example 1: General Description of Enzymatic depolymerization**

The following is a general description on how enzymatic depolymerization is performed and could be used in the present invention.

The enzymatic depolymerization is carried out for 48 hours at room temperature by mixing 50 μl of a solution containing 20 mg/ml of enoxaparin sodium to be assayed, 200 μl of a 100 mM acetic acid/NaOH solution at pH 7.0 containing 2 mM calcium acetate and 1 mg/ml of BSA with 50 μl of the stock solution of the 3 heparinases. The heparinases are stored at -30°C. The heparinases are in a buffer solution and the titer for each heparinase is 0.5 IU/ml (composition of the buffer solution: aqueous solution pH 7 of $KH_2PO_4$ at a concentration of 0.01 mol/l and supplemented with bovine serum albumin (BSA) at 2 mg/ml).

The reduction is carried out on 60 μl of the product depolymerized with the heparinases by adding 10 μl of a 30 g/l $NaBH_4$ solution in 100 mM sodium acetate prepared immediately before use.

**Example 2:**

NMR of Disaccharide 3 obtained according to the general description of Example 1

Proton spectrum in $D_2O$, 400 MHz, T=298K, δ in ppm: 3.34 (1H, dd, J=7 and 2Hz, H2), 3.72 (1 H, t, J=8Hz, H6), 3.90 (1H, m, H3), 4.03 (1 H, s, H4), 4.20 (1H, d, J=8Hz, H6), 4.23 (1 H, t, J=5Hz, H3'), 4.58 (1 H, m, H2'), 4.78 (1 H, m, H5), 5.50 (1H, s, H1), 5.60 (1 H, dd, J=6 and 1 Hz, H1'), 6.03 (1 H, d, J=5Hz, H4')].

**Example 3**

NMR of Tetrasaccharide 1 obtained according to the general description of Example 1

Proton spectrum in $D_2O$, 400 MHz, T=298K, δ in ppm: 3.15 (1 H, s, H2), 3.25 (1H, m, H2"), 3.60 (1H, m, H3"), between 3.70 and 4.70 (14H, unresolved complex H3/H4/H6, H2'/H3'/H4'/H5', H4"/H5"/H6", H2'"/H3'"), 4.75 (1 H, m, H5), between 5.20 and 5.40 (2H, m, H1' and H1"), 5.45 (1H, m, H1'"), 5.56 (1H, m, H1), 5.94 (1 H, d, J=5Hz, H4)

**Example 4**

NMR of the Trisaccharide 1 obtained according to the general description of Example 1

Spectrum in $D_2O$, 600 MHz, (δ in ppm): 3.28 (1 H, m), 3.61 (1 H, t, 7Hz), 3.79 (1H, t, 7Hz), 3.95 (1H, d, 6Hz), 4.00 (1 H, s), 4.20 (1H, m), 4.28 (2H, m), 4.32 (1H, d, 4Hz), 4.41 (1 H, s), 4.58 (1 H, s), 4.61 (1H, s), 4.90 (1 H, broad s), 5.24 (1H, s), 5.45 (1 H, s), 5.95 (1H, s).

**Example 5**

NMR of ΔGlcA-Gal-Gal-Xyl-Ser, obtained according to the present invention.

Spectrum in $D_2O$, 500 MHz (δ in ppm): 3.30 (1H, t, 7Hz), 3.34 (1 H, t, 8Hz), 3.55 (1H, t, 7Hz), 3.60 (1H, t, 7Hz), between 3.63 and 3.85 (10H, m), 3.91 (2H, m), 3.96 (1H, dd, 7 and 2Hz), between 4.02 and 4.10 (3H, m), 4.12 (1 H, d, 2Hz), 4.18 (1H, m), 4.40 (1 H, d, 6Hz), 4.46 (1H, d, 6Hz), 4.61 (1H, d, 6Hz), 5.29 (1 H, d, 3Hz), 5.85 (1 H, d, 3Hz).

**Example 6: Principle of the Quantification**

The 1,6-anhydro content in the chromatogram obtained with the reduced solution is determined by the normalized area percentage method.

The molar absorptivity coefficient of the unsaturated uronic acids is taken as constant, and consequently the

response factor of a polysaccharide is proportlonal to its molecular mass.

In the methods according to the invention, the widely accepted hypothesis that all the unsaturated oligosaccharides contained in the mixture have the same molar absorptivity, equal to 5500 $mor^{-1}.l.cm^{-1}$, is made.

The two coeluted 1,6-anhydro residues, disaccharides 1 and 2, are integrated together.

It is therefore possible to determine the percentage by weight of all the constituents of the depolymerized mixture in the starting unfractionated heparin or fractionated heparin, for example constituents such as 1,6-anhydro derivatives or acetylated sugar derivatives. For the four 1,6-anhydro derivatives, namely disaccharide 1, disaccharide 2, disaccharide 3, and tetrasaccharide 1, that correspond to the peaks 7, 8, 13, and 19, the following

$$\% w/w_{7+8} = 100 \cdot \frac{443 \cdot (Area_7 + Area_8)}{\sum Mw_x \cdot Area_x}$$

$$\% w/w_{13} = 100 \cdot \frac{545 \cdot Area_{13}}{\sum Mw_x \cdot Area_x}$$

$$\% w/w_{19} = 100 \cdot \frac{1210 \cdot Area_{19}}{\sum Mw_x \cdot Area_x}$$

percentages by weight were obtained:

$Area_7$, $Area_8$, $Area_{13}$ and $Area_{19}$ correspond to the areas of each of the peaks 7, 8, 13, and 19. The molar masses of each of these 4 compounds are 443, 443, 545 and 1210 respectively. $\sum Mw_x \cdot Area_x$ corresponds to the ratio of the area of each peak of the chromatogram by the molar mass of the corresponding product.

If $M_w$ is the mean mass of the low-molecular-weight heparin studied, the percentage of oligosaccharide chains ending with a 1,6-anhydro ring is obtained in the following manner.

$$\%_{1.6anhydro} = M_W \cdot \left( \frac{\% w/w_{7+8}}{443} + \frac{\% w/w_{13}}{545} + \frac{\% w/w_{19}}{1210} \right)$$

Similarly, the percentage by weight of other components in a sample of material chosen from unfractionated heparins and fractionated heparins can be determined.

The exact molecular mass is attributed to all the identified peaks on the chromatograms (see Table 1):

**Table 1**

| Oligosaccharide | Oligosaccharide after reduction | Molecular mass |
|---|---|---|
| 1 | 1 | 741 |
| 2 | 20 | 401 |
| 3 | 3 | 734 |
| 4 | 21 | 461 |
| 5 | 22 | 461 |
| 6 | 23 | 503 |
| 7 | 7 | 443 |
| 8 | 8 | 443 |
| 9 | 24 | 503 |
| 10 | 25 | 563 |
| 11 | 26 | 563 |
| 12 | 27 | 563 |

(continued)

| Oligosaccharide | Oligosaccharide after reduction | Molecular mass |
|---|---|---|
| 13 | 13 | 545 |
| 14 | 28 | 605 |
| 15 | 29 | 1066 |
| 16 | 30 | 665 |
| 17 | 31 | 965 |
| 18 | 32 | 1168 |
| 19 | 19 | 1210 |

The following is the nomenclature of the saccharides that corresponds with the peak numbers of Figures 2 and 3

1: ∑GlcA$\beta_{1\text{-}3}$ Gal $\beta_{1\text{-}3}$ Gal$\beta_{1\text{-}4}$ Xyl β1-O-Ser
2: 4-deoxy-α-L-threo-hex-enepyranosyluronic acid-(1→4)-2-deoxy-2-acetamido-α-D-glucopyranosyl sodium salt
3: AGlcA$\beta_{1\text{-}3}$ Gal$\beta_{1\text{-}3}$ Gal$\beta_{1\text{-}4}$ Xyl $\beta_1$-O-$CH_2$-COOH
4: 4-deoxy-α-L-*threo*-hex-4-enegalactopyranosyluronic acid-(1→4)-2-deoxy-2-sulfamido-β-D-glucopyranose disodium salt
5: 4-deoxy-α-L-threo-hex-enepyranosyluronic acid-(1→4)-2-deoxy-2-sulfamido-α-D-glucopyranosyl sodium salt
6: 4-deoxy-α-L-threo-hex-enepyranosyluronic acid-(1→4)-2-deoxy-2-acetamido-6-O-sulfo-α-D-glucopyranosyl disodium salt
7: 4-deoxy-α-L-*threo*-hex-4-enepyranosyluronic acid-(1→4)-1,6-anhydro-2-deoxy-2-sulfamido-β-D-glucopyranose disodium salt (disaccharide 1)
8: 4-deoxy-α-L-*threo*-hex-4-enepyranosyluronic acid-(1→4)-1,6-anhydro-2-deoxy-2-sulfamido-β-D-mannopyranose disodium salt (disaccharide 2)
9: 4-deoxy-2-O-sulfo-α-L-threo-hex-enepyranosyluronic acid-(1→4)-2-deoxy-2-acetamido-α-D-glucopyranosyl disodium salt
10: 4-deoxy-α-L-*threo*-hex-4-enegalactopyranosyluronic acid-(1→4)-2-deoxy-2-sulfamido-6-O-sulfo-β-D-glucopyranose trisodium salt
11: 4-deoxy-α-L-threo-hex-enepyranosyluronic acid-(1→4)-2-deoxy-2-sulfamido-6-O-sulfo-β-D-glucopyranosyl trisodium salt
12: 4-deoxy-2-O-sulfo-α-L-threo-hex-enepyranosyluronic acid-(1→4)-2-deoxy-2-sulfamido-α-D-glucopyranosyl trisodium salt
13: 4-deoxy-2-O-sulfo-α-L-*threo*-hex-4-onepyranosyluronic acid-(1→4)-1,6-anhydro-2-deoxy-2-sulfamido-β-D-glucopyranose trisodium salt (Disaccharide 3)
14: 4-deoxy-2-O-sulfo-α-L-threo-hex-enepyranosyluronic acid-(1→4)-2-deoxy-2-acetamido-6-O-sulfo-α-D-glucopyranosyl trisodium salt
15: 4-deoxy-α-L-threo-hex-enepyranosyluronic acid-(1→4)-2-deoxy-2-acetamido-6-O-sulfo-α-D-glucopyranosyl-(1→4)-β-D-glucopyranosyluronic acid-(1→4)-2-deoxy-2-sulfamido-3-O-sulfo-α-D-gluco-pyranosyl) pentasodium salt
16: 4-deoxy 2-O-sulfo-α-L-threo-hex-enepyranosyluronic acid-(1→4)-2-deoxy-2-sulfamido-6-O-sulfo-α-D-glucopyranosyl tetrasodium salt
17: 4-deoxy-α-L-threo-hex-enepyranosyluronic acid-(1→4)-2-deoxy-2-acetamido-6-O-sulfo-α-D-glucopyranosyl-(1→4)-β-D-glucopyranosyluronic acid-(1→4)-2-deoxy-2-sulfamido-3,6-di-O-sulfo-α-D-glucopyranosyl) hexasodium salt
18: 4-deoxy-2-O-suffo-α-L-threo-hex-enepyranosyluronic acid-(1→4)-2-deoxy-2-sulfamido-6-O-sulfo-D-glucopyranosyl-(1→4)-2-O-sulfo-α-L-idopyranosyluronic acid hexasodium salt
19: 4-deoxy-2-O-sulfo-α-L-threo-hex-enepyranosyluronic acid-(1→4)-2-deoxy-2-sulfamido-6-O-sulfo-α-D-glucopyranosyl-(1→4)-2-O-sulfo-α-L-idopyranosyluronic acid-(1→4)-1,6-anhydro-2-deoxy-sulfamido-β-D-mannopyranose, hexasodium salt (tetrasaccharide 1)
20: 4-deoxy-α-L-threo-hex-enepyranosyluronic acid-(1→4)-2-deoxy-2-acetamido-α-D-glucitol sodium salt
21: 4-deoxy-α-L-threo-hex-enepyranosyluronic acid-(1→4)-2-deoxy-2-sulfamido-β-D-glucitol disodium salt
22: 4-deoxy-α-L-threo-hex-enepyranosyluronic acid-(1→4)-2-deoxy-2-sulfamido-α-D-glucitol disodium salt
23: 4-deoxy-α-L-threo-hex-enepyranosyluronic acid-(1→4)-2-deoxy-2-acetamido-6-O-sulfo-α-D-glucitol disodium salt
24: 4-deoxy-2-O-sulfo-α-L-threo-hex-enepyranosyluronic acid-(1→4)-2-deoxy-2-acetamido-α-D-glucitol disodium

salt
25: 4-deoxy-α-L-threo-hex-enegalactopyranosyluronic acid(1→4)-2-deoxy-2-sulfamido-6-O-sulfo-β-D glucitol trisodium salt
26: 4-deoxy-α-L-threo-hex-enepyranosyluronic acid-(1→4)-2-deoxy-2-sulfamido-6-O-sulfo-α-D-glucitol trisodium salt
27: 4-deoxy-2-O-sulfo-α-L-threo-hex-enepyranosyluronic acid-(1→4)-2-deoxy-2-sulfamido-α-D-glucitol trisodium salt
28: 4-deoxy-2-O-sulfo-α-L-threo-hex-enepyranosyluronic acid-(1→4)-2-deoxy-2-acetamido-6-O-sulfo-α-D-glucitol trisodium salt
29: 4-deoxy-α-L-threo-hex-enepyranosyluronic acid-(1→4)-2-deoxy-2-acetamido-6-O-sulfo-α-D-glucopyranosyl-(1→4)-β-D-glucopyranosyluronic acid-(1→4)-2-deoxy-2-sulfamido-3-O-sulfo-α-D-glucitol) pentasodium salt
30: 4-deoxy-2-O-sulfo-α-L-threo-hex-enepyranosyluronic acid-(1→4)-2-deoxy-2-sulfamido-6-O-sulfo-α-D-glucitol trisodium salt
31: 4-deoxy-α-L-threo-hex-enepyranosyluronic acid-(1→4)-2-deoxy-2-acetamido-6-O-sulfo-α-D-glucopyranosyl-(1→4)-β-D-glucopyranosyl-uronic acid-(1→4)-2-deoxy-2-sulfamido-3,6-di-O-sulfo-α-D-glucitol) hexasodium salt
32: 4-deoxy-2-O-sulfo-α-L-threo-hex-enepyranosyluronic acid-(1→4)-2-deoxy-2-sulfamido-6-O-sulfo-α-D-glucopyranosyl-(1→4)-2-O-sulfo-α-L-idopyranosyluronic acid hexasodium salt (form reduced with $NaBH_4$).

Abbreviations Used:

| | |
|---|---|
| IdoA: | α-L-Idopyranosyluronic acid; |
| GlcA: | β-D-Glucopyranosyluronic acid; |
| ΔGlcA: | 4,5-unsaturated acid: 4-deoxy-α-L-*threo*-hex-enepyranosyluronic acid; |
| Gal: | D-Galactose; |
| Xyl: | xylose; |
| GlcNAc: | 2-deoxy-2-acetamido-α-D-glucopyranose; |
| GlcNS: | 2-deoxy-2-sulfamido-α-D-glucopyranose; |
| 2S: | 2-O-sulfate, |
| 3S: | 3-O-sulfate, |
| 6S: | 6-O-sulfate. |

## Claims

**1.** A method for quantifying the amount of **oligosaccharide chains whose end is modified with a 1,6-anhydro bond** in a sample of material chosen from unfractionated heparins and fractionated heparins, comprising:

(a) depolymerizing said sample by an enzymatic method; and
(b) reducing the depolymerized sample of step (a);
(c) detecting the quantity of the **oligosaccharide chains** in the reduced sample of (b) by high-performance liquid chromatography,

**Where said high-performance liquid chromatography:**

- **is strong anion exchange chromatography;**
- uses a solid support functionalized with quaternary ammonium exchange groups and a mobile phase which is transparent in the UV region up to 200nm and comprises at least methane sulfonate,
- wherein a double detection is carried out:

  o at 234nm on the one hand and
  o at 202-230nm on the other hand such that the absorptivity of the non acetylated saccharides is cancelled out;

and wherein the depolymerized sample comprises at least one oligosaccharide chain whose end is modified with a 1,6-anhydro bond, and which is chosen from any of the following:

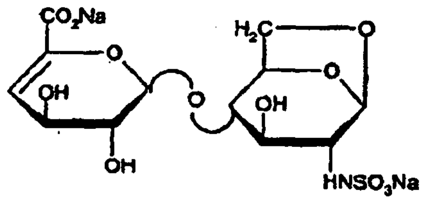

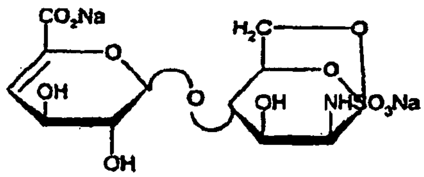

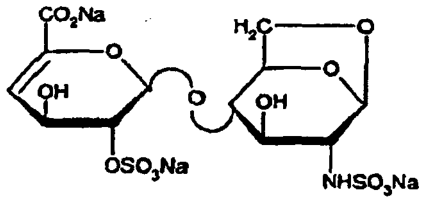

or

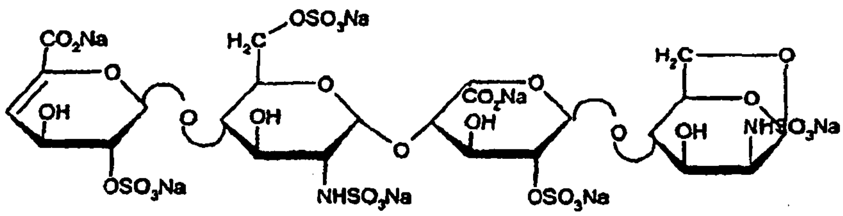

2. The method as claimed in claim **1,** wherein the enzymatic method is carried out using at least one heparinase.

3. The method as claimed in claim **1,** wherein enzymatic method is carried out using a mixture of heparinase 1 (EC 4.2.2.7.), heparinase 2 (heparin lyase II), and heparinase 3 (EC 4.2.2.8.).

4. The method as claimed in claim **1,** wherein reducing the depolymerized sample of step (a) is carried out by exposure to a reducing agent

5. The method as claimed in claim **4,** wherein the reducing agent is $NaBH_4$ or an alkali metal salt of the borohydride anion.

6. The method as claimed in claim **1,** wherein the fractionated heparin is enoxaparin sodium.

7. The method as claimed in claim **4,** wherein the reducing reduces the reducing ends of enoxaparin sodium which are not in the 1,6-anhydro form.

8. The method as claimed in claim **1,** wherein the strong anion exchange chromatography is carried out using a Spherisorb® SAX column.

9. The method as defined in claim **1,** wherein the high-performance liquid chromatography is carried out in a mobile phase which is transparent to UV light with wavelengths from about 200 nm to about 400 nm.

10. The method as claimed in claim **1,** wherein the strong anion exchange chromatography is carried out at a pH of about 2.0 to about 6.5.

**11.** The method as claimed in claim **1,** wherein the strong anion exchange chromatography is carried out at a pH of about 3.

**12.** The method as claimed in claim **1,** wherein the high performance liquid chromatography utilizes a mobile phase comprising a sodium perchlorate solution that is maintained at about pH 3.0.

**13.** The method as claimed in claim **1**, wherein the mixture of 1,6-anhydro residues range from 15% to 25% of the weight average molecular weight of the sample.

**14.** The method as claimed in claim **1**, wherein the components detected in the depolymerized sample of step (b) are acetylated sugars.

**15.** The method as claimed in claim **14**, wherein the sugars are selectively detected by subtracting an absorbance measured at a wavelength at which both acetylated and nonacetylated sugars absorb from an absorbance measured at a wavelength at which acetylated but not nonacetylated sugar absorbs.

**16.** The method as claimed in claim **14**, wherein the acetylated sugars detected are selected from acetylated oligosaccharides ΔIVa, ΔIIa, ΔIIIa, ΔIa, ΔIIa-$\underline{IVs}_{glu}$, <u>and</u> ΔIIa-$\underline{IIs}_{glu}$.

**17. The method of claim 1** for quantifying the amount of 1,6-anhydro residues in a sample of enoxaparin sodium, comprising:

(a) depolymerizing said sample using a mixture of heparinase 1 (EC 4.2.2.7.), heparinase 2 (heparin lyase II), and heparinase 3 (EC 4.2.2.8.);
(b) reducing the depolymerized sample of step (a); and
**(c)** detecting the quantity of the 1,6-anhydro residues in the reduced sample of step (b) by high-performance liquid chromatography.

**18.** A method as claimed in claim **17**, wherein the quantity of the 1,6-anhydro residues range from 15% to 25% of the weight average molecular weight of the sample.

**Patentansprüche**

**1.** Verfahren zur Quantifizierung der Menge an Oligosaccharidketten, deren Ende mit einer 1,6-Anhydro-Bindung modifiziert ist, in einer Probe von aus unfraktionierten Heparinen und fraktionierten Heparinen gewähltem Material, wobei:

(a) die Probe mit einem enzymatischen Verfahren depolymerisiert wird; und
(b) die depolymerisierte Probe aus Schritt (a) reduziert wird;
(c) die Menge der Oligosaccharidketten in der reduzierten Probe aus (b) mittels Hochleistungsflüssigkeitschromatographie nachgewiesen wird, bei der

- es sich um starke Anionenaustauschchromatographie handelt;
- ein mit quaternären Ammoniumaustauschgruppen funktionalisierter fester Träger und eine mobile Phase, die im UV-Bereich bis 200 nm transparent ist und wenigstens Methan-sulfonat umfasst, zum Einsatz kommen,
- wobei ein Doppelnachweis durchgeführt wird, und zwar:

°einerseits bei 234 nm und
°andererseits bei 202-230 nm, so dass die Absorptivität der nicht acetylierten Saccharide wegfällt;

und wobei die depolymerisierte Probe wenigstens eine Oligosaccharidkette umfasst, deren Ende mit einer 1,6-Anhydro-Bindung modifiziert ist und die aus einer der folgenden Verbindungen gewählt ist:

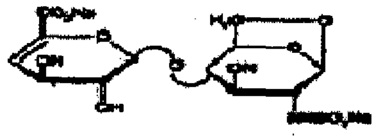

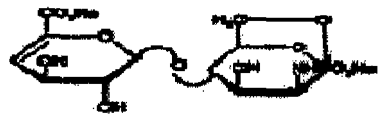

oder

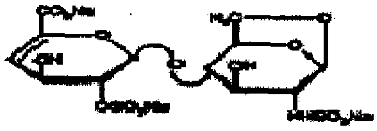

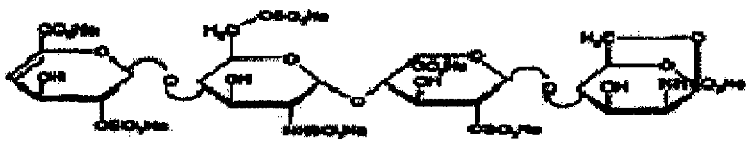

2. Verfahren nach Anspruch 1, wobei das enzymatische Verfahren unter Verwendung wenigstens einer Heparinase durchgeführt wird.

3. Verfahren nach Anspruch 1, wobei das enzymatische Verfahren unter Verwendung eines Gemischs von Heparinase 1 (EC 4.2.2.7.), Heparinase 2 (Heparin-lyase II) und Heparinase 3 (EC 4.2.2.8.) durchgeführt wird.

4. Verfahren nach Anspruch 1, wobei das Reduzieren der depolymerisierten Probe aus Schritt (a) durch Inkontaktbringen mit einem Reduktionsmittel erfolgt.

5. Verfahren nach Anspruch 4, wobei es sich bei dem Reduktionsmittel um $NaBH_4$ oder ein Alkalimetalsalz des Borhydrid-Anions handelt.

6. Verfahren nach Anspruch 1, wobei es sich bei dem fraktionierten Heparin um Enoxaparin-Natrium handelt.

7. Verfahren nach Anspruch 4, wobei beim Reduzieren die reduzierenden Enden von Enoxaparin-Natrium, die nicht in der 1,6-Anhydro-Form vorliegen, reduziert werden.

8. Verfahren nach Anspruch 1, wobei die starke Anionenaustauschchromatographie unter Verwendung einer Spherisorb®-SAX-Säule durchgeführt wird.

9. Verfahren nach Anspruch 1, wobei die Hochleistungsflüssigkeitschromatographie in einer mobilen Phase durchgeführt wird, die für UV-Licht mit Wellenlängen von etwa 200 nm bis etwa 400 nm transparent ist.

10. Verfahren nach Anspruch 1, wobei die starke Anionenaustauschchromatographie bei einem pH-Wert von etwa 2,0 bis etwa 6,5 durchgeführt wird.

11. Verfahren nach Anspruch 1, wobei die starke Anionenaustauschchromatographie bei einem pH-Wert von etwa 3 durchgeführt wird.

12. Verfahren nach Anspruch 1, wobei bei der Hochleistungsflüssigkeitschromatographie eine mobile Phase genutzt wird, die eine Natriumperchloratlösung umfasst, die bei etwa pH 3,0 gehalten wird.

**13.** Verfahren nach Anspruch 1, wobei das Gemisch von 1,6-Anhydro-Resten im Bereich von 15% bis 25% des gewichtsmittleren Molekulargewichts der Probe liegt.

**14.** Verfahren nach Anspruch 1, wobei es sich bei den in der depolymerisierten Probe aus Schritt (b) nachgewiesenen Komponenten um acetylierte Zucker handelt.

**15.** Verfahren nach Anspruch 14, wobei die Zucker selektiv durch Subtrahieren einer bei einer Wellenlänge, bei der sowohl acetylierte als auch nicht acetylierte Zucker absorbieren, gemessenen Absorbanz von einer bei einer Wellenlänge, bei der acetylierter, jedoch nicht nicht acetylierter Zucker absorbiert, gemessenen Absorbanz nachgewiesen werden.

**16.** Verfahren nach Anspruch 14, wobei die nachgewiesenen acetylierten Zucker aus acetylierten Oligosacchariden ∆IVa, ∆IIa, ∆IIIa, ∆Ia, ∆IIa-IVs$_{glu}$ und AIIa-IIs$_{glu}$ ausgewählt sind.

**17.** Verfahren nach Anspruch 1 zur Quantifizierung der Menge an 1,6-Anhydro-Resten in einer Probe von Enoxaparin-Natrium, wobei :

(a) die Probe unter Verwendung eines Gemischs von Heparinase 1 (EC 4.2.2.7.), Heparinase 2 (Heparin-Lyase II) und Heparinase 3 (EC 4.2.2.8.) depolymerisiert wird;
(b) die depolymerisierte Probe aus Schritt (a) reduziert wird; und
(c) die Menge der 1,6-Anhydro-Reste in der reduzierten Probe aus Schritt (b) mittels Hochleistungsflüssigkeitschromatographie nachgewiesen wird.

**18.** Verfahren nach Anspruch 17, wobei die Menge der 1,6-Anhydro-Reste im Bereich von 15% bis 25% des gewichtsmittleren Molekulargewichts der Probe liegt.

**Revendications**

**1.** Procédé pour quantifier la quantité de chaînes d'oligosaccharide dont l'extrémité est modifiée avec une liaison 1,6-anhydro dans un échantillon de matériau choisi parmi des héparines non fractionnées et des héparines fractionnées comprenant :

(a) la dépolymérisation dudit événement par un procédé enzymatique ; et
(b) la réduction de l'échantillon dépolymérisé de l'étape (a) ;
(c) la détection de la quantité des chaînes d'oligosaccharide dans l'échantillon réduit de (b) par chromatographie liquide haute performance,

où ladite chromatographie liquide haute performance :

- est une chromatographie d'échange d'anion fort,
- utilise un support solide fonctionnalisé avec des groupes d'échange d'ammonium quaternaire et une phase mobile qui est transparente dans la région UV jusqu'à 200 nm et comprend au moins du méthanesulfonate,
- comprend la conduite d'une double détection :

  • à 234 nm d'une part et
  • à 202-230 nm d'autre part de sorte que l'absorptivité des saccharides non acétylés soit éliminée ;

et dans lequel l'échantillon dépolymérisé comprend au moins une chaîne d'oligosaccharide dont l'extrémité est modifiée avec une liaison 1,6-anhydro et qui est choisie parmi l'une des suivantes :

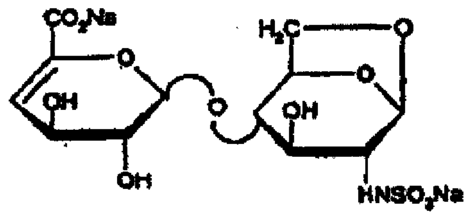

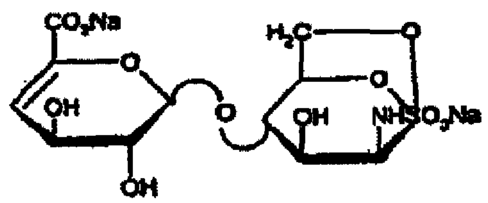

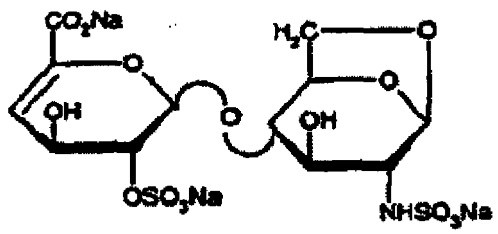

ou

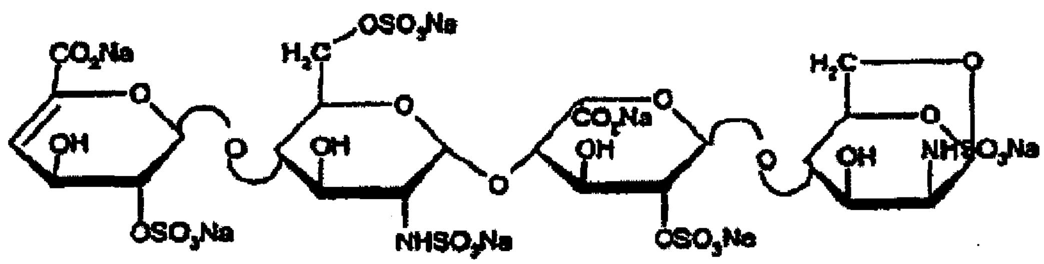

2. Procédé selon la revendication 1, dans lequel le procédé enzymatique est conduit en utilisant au moins une héparinase.

3. Procédé selon la revendication 1, dans lequel le procédé enzymatique est conduit en utilisant un mélange d'héparinase 1 (EC 4.2.2.7), d'héparinase 2 (héparine lyase II), et d'héparinase 3 (EC 4.2.2.8).

4. Procédé selon la revendication 1, dans lequel la réduction de l'échantillon dépolymérisé de l'étape (a) est conduite par exposition à un agent réducteur.

5. Procédé selon la revendication 4, dans lequel l'agent réducteur est $NaBH_4$ ou un sel de métal alcalin de l'anion borohydrure.

6. Procédé selon la revendication 1, dans lequel l'héparine fractionnée est l'énoxaparine sodique.

7. Procédé selon la revendication 4, dans lequel la réduction réduit les extrémités réductrices d'énoxaparine sodique qui ne sont pas sous la forme 1,6-anhydro.

8. Procédé selon la revendication 1, dans lequel la chromatographie d'échange d'anion fort est conduite en utilisant une colonne Spherisorb® SAX.

9. Procédé tel que défini dans la revendication 1, dans lequel la chromatographie liquide haute performance est conduite dans une phase mobile qui est transparente à une lumière UV avec des longueurs d'onde d'environ 200 nm à environ 400 nm.

10. Procédé selon la revendication 1, dans lequel la chromatographie d'échange d'anion fort est conduite à un pH d'environ 2,0 à environ 6,5.

11. Procédé selon la revendication 1, dans lequel la chromatographie d'échange d'anion fort est conduite à un pH d'environ 3.

12. Procédé selon la revendication 1, dans lequel la chromatographie liquide haute performance utilise une phase mobile comprenant une solution de perchlorate de sodium qui est maintenue à environ pH 3,0.

13. Procédé selon la revendication 1, dans lequel le mélange de résidus 1,6-anhydro est dans la plage de 15 % à 25 % du poids moléculaire moyen en poids de l'échantillon.

14. Procédé selon la revendication 1, dans lequel les composants détectés dans l'échantillon dépolymérisé de l'étape (b) sont des sucres acétylés.

15. Procédé selon la revendication 14, dans lequel les sucres sont sélectivement détectés par soustraction d'une absorbance mesurée à une longueur d'onde à laquelle des sucres acétylés et non acétylés absorbent à partir d'une absorbance mesurée à une longueur d'onde à laquelle le sucre acétylé, mais pas le sucre non acétylé, absorbe.

16. Procédé selon la revendication 14, dans lequel les sucres acétylés détectés sont choisis parmi les oligosaccharides acétylés ΔIVa, ΔIIa, ΔIIIa, ΔIa, ΔIIa-IV$s_{glu}$ et ΔIIa-II$s_{glu}$.

17. Procédé de la revendication 1 pour quantifier la quantité de résidus 1,6-anhydro dans un échantillon d'énoxaparine sodique, comprenant :

    (a) la dépolymérisation dudit échantillon en utilisant un mélange d'héparinase 1 (EC 4.2.2.7), d'héparinase 2 (héparine lyase II), et d'héparinase 3 (EC 4.2.2.8) ;
    (b) la réduction de l'échantillon dépolymérisé de l'étape (a) ; et
    (c) la détection de la quantité des résidus 1,6-anhydro dans l'échantillon réduit de l'étape (b) par chromatographie liquide haute performance.

18. Procédé selon la revendication 17, dans lequel la quantité des résidus 1,6-anhydro est dans la plage de 15 % à 25 % du poids moléculaire moyen en poids de l'échantillon.

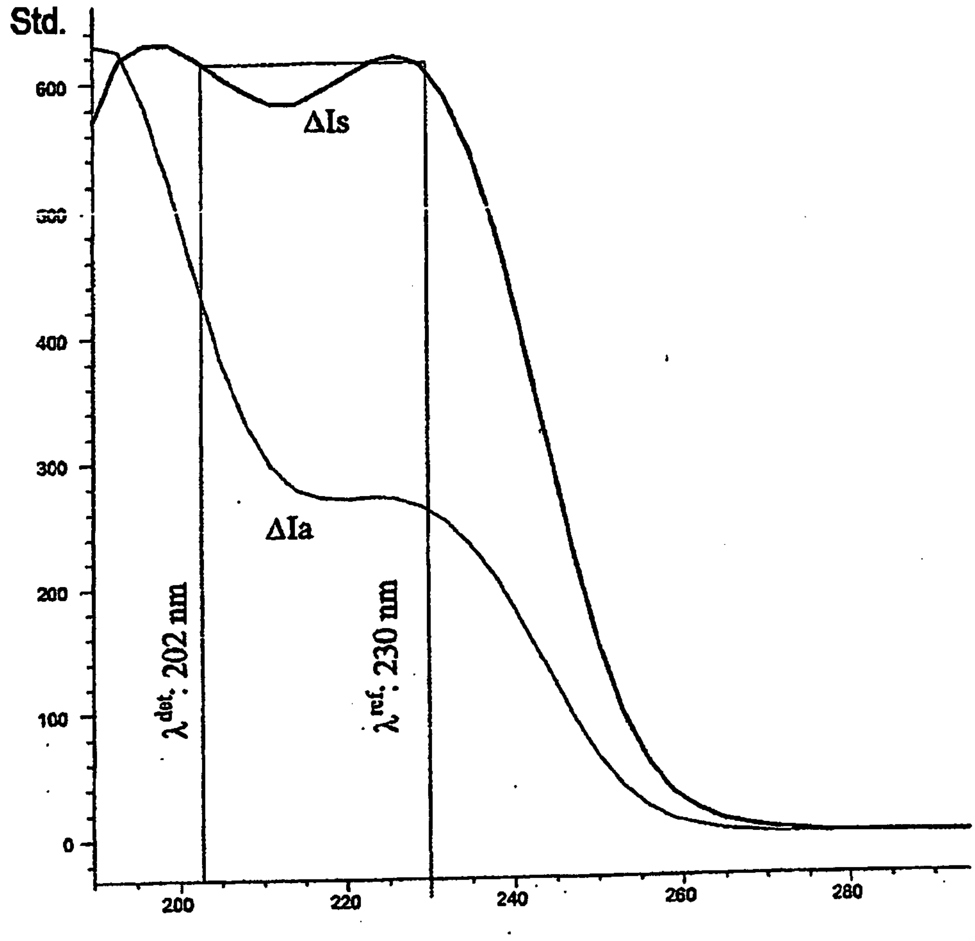
Std.
600
400
300
200
100
0
200
220
240
260
280
ΔIs
ΔIa
λdet.: 202 nm
λref.: 230 nm

Figure 1

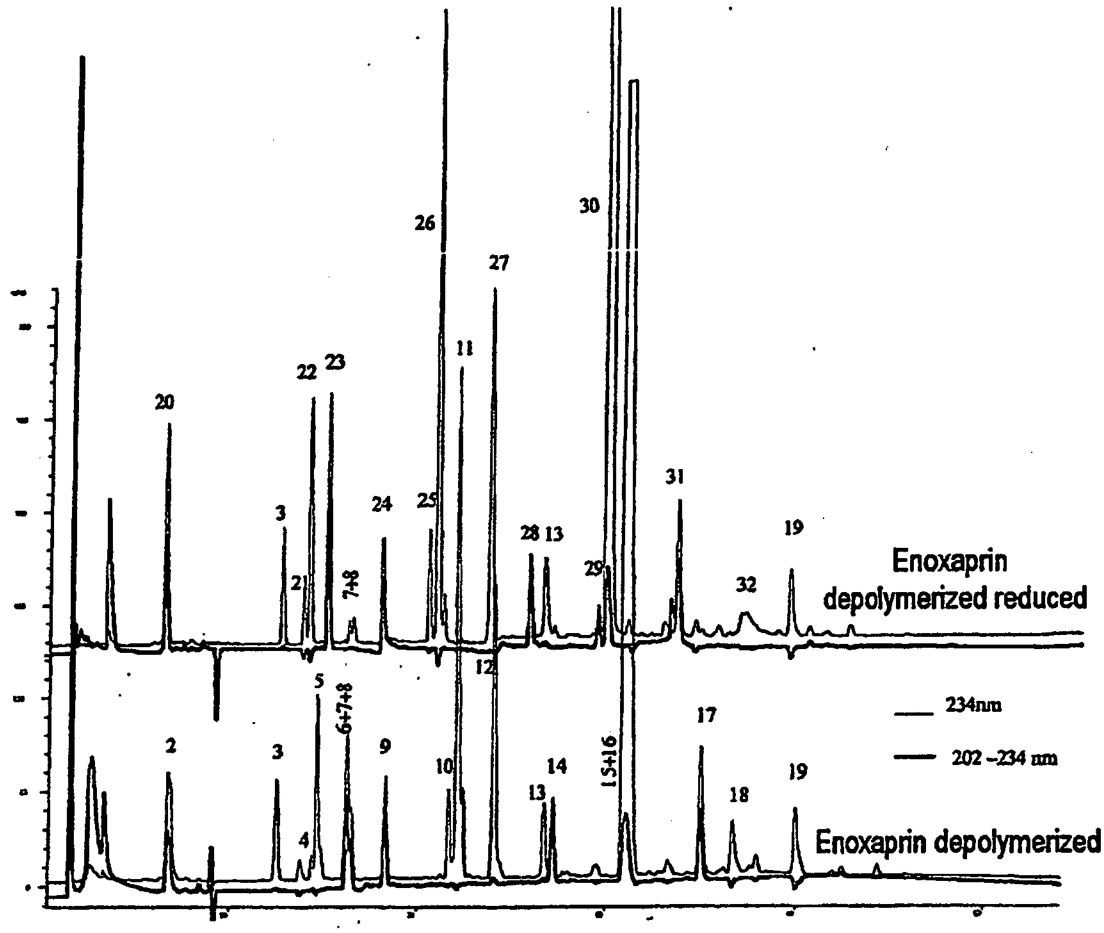
30
26
27
11
22
23
20
31
24
25
3
28
13
19
21
7+8
29
Enoxaprin
depolymerized reduced
32
12
5
6+7+8
234nm
202 -234 nm
17
2
3
9
10
14
15+16
19
13
18
4
Enoxaprin depolymerized

**Figure 2**

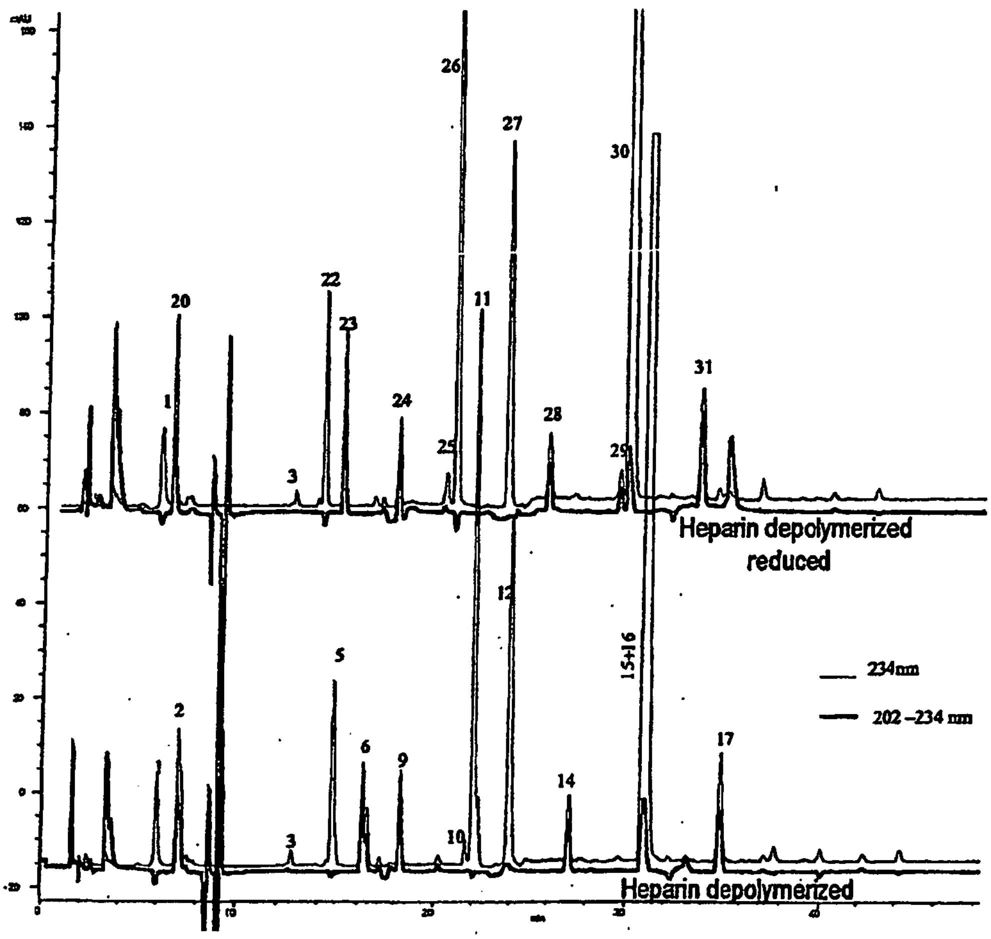
26
27
30
22
20
11
23
31
1
24
28
25
29
3
Heparin depolymerized
reduced
12
5
15+16
234nm
202-234 nm
2
17
6
9
14
3
10
Heparin depolymerized

**Figure 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9533468 A
- WO 0129055 A
- WO 0172762 A
- WO 9001501 A


### Non-patent literature cited in the description


- **R.J. LINHARDT et al.** *Seminars in Thombosis and Hemostatis,* 1999, vol. 25 (3), 5-16
- **U.M. DESAI et al.** *Arch. Biochem. Biophys.,* 1993, vol. 306 (2), 461-468
- **S. YAMADA ; K. YOSHIDA ; M. SUGIURA ; K-H KHOO ; H.R. MORRIS ; A. DELL.** *J. Biol. Chem.,* 1993, vol. 270 (7), 4780-4787
- **K. SUGAHARA et al.** *J. Biol. Chem.,* 1995, vol. 270 (39), 22914-22923
- **K. SUGAHARA et al.** *J.Biol.Chem.,* 1992, vol. 267 (3), 1528-1533
- **K. G. RICE ; R. J. LINHARDT.** *Carbohydrate Research,* 1989, vol. 190, 219-233
- **LAMKJAER et al.** *Carbohydrate Research,* 1995, vol. 266, 37-52